(19) Europäisches Patentamt
European Patent Office
Office européen des brevets

(11) **EP 4 693 941 A1**

(12) **EUROPEAN PATENT APPLICATION**
published in accordance with Art. 153(4) EPC

(43) Date of publication:
**11.02.2026 Bulletin 2026/07**

(21) Application number: **24814241.6**

(22) Date of filing: **20.05.2024**

(51) International Patent Classification (IPC):
**H04B 7/06** (2006.01)

(52) Cooperative Patent Classification (CPC):
**H04B 7/06**

(86) International application number:
**PCT/CN2024/094299**

(87) International publication number:
**WO 2024/245042 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.06.2023 CN 202310645081**

(71) Applicant: **Huawei Technologies Co., Ltd.
Shenzhen, Guangdong 518129 (CN)**

(72) Inventors:
• **WANG, Zhenyu**
  **Shenzhen, Guangdong 518129 (CN)**
• **WEN, Jini**
  **Shenzhen, Guangdong 518129 (CN)**
• **LI, Pengpeng**
  **Shenzhen, Guangdong 518129 (CN)**
• **ZHAO, Jie**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **ANTENNA PATTERN SWITCHING METHOD AND DEVICE**

(57)    An antenna pattern switching method and an apparatus may be applied to the field of WLAN technologies, for example, a WLAN communication system supporting 802.11 series protocols. In the method, before a first moment, an AP receives a physical layer protocol data unit PPDU by using a first antenna pattern; and after the first moment, receives the PPDU by using a second antenna pattern. Based on the solution, during receiving of a single PPDU, the AP may sequentially use two antenna patterns to receive a same PPDU, in other words, the AP may perform antenna pattern switching during receiving of the single PPDU. The switching process does not need to depend on an RTS/CTS mechanism, in other words, a sender of the PPDU does not need to be learned of, to improve flexibility and applicability of the antenna pattern switching, and further improve receiving performance in a plurality of scenarios (for example, a scenario in which the RTS/CTS mechanism is not used and a scenario in which the RTS/CTS mechanism is used).

FIG. 7

**Description**

This application claims priority to Chinese Patent Application No. 202310645081.X, filed with the China National Intellectual Property Administration on June 1, 2023 and entitled "ANTENNA PATTERN SWITCHING METHOD AND APPARATUS", which is incorporated herein by reference in its entirety.

**TECHNICAL FIELD**

Embodiments of this application relate to the communication field, and in particular, to an antenna pattern switching method and an apparatus.

**BACKGROUND**

With continuous development of a wireless local area network (wireless local area network, WLAN) technology, a theoretical upper limit of a physical layer rate of a product that currently can support a WLAN 802.11ax protocol has reached 9.6 gigabits per second (Gbps). However, during actual product application, usually, the upper limit of the rate cannot be reached. Reasons are that: 1. A gain of a common omnidirectional antenna is limited, and therefore a signal-to-noise ratio of a medium- or long-distance user is limited. 2. Various types of interference exist during communication.

To overcome the preceding impact, a smart antenna technology can be used in a WLAN system. The smart antenna technology is a technology that uses different antenna patterns (pattern) to select diversity. During communication, an optimal antenna pattern is selected. In this way, a received signal-to-noise ratio of a user signal can be increased, and an optimal signal beam direction can be matched, to reduce interference.

Generally, an access point (access point, AP) switches an antenna pattern during uplink receiving, to use an optimal antenna pattern for receiving. However, current antenna pattern switching depends on a request to send (request to send, RTS) frame and a clear to send (clear to send, CTS) frame.

**SUMMARY**

Embodiments of this application provide an antenna pattern switching method and an apparatus, to implement antenna pattern switching without depending on an RTS/CTS mechanism, so as to improve flexibility and applicability of the antenna pattern switching.

According to a first aspect, an antenna pattern switching method is provided. The method may be performed by an access point (access point, AP), may be performed by a module used in the AP, for example, a processor, a chip, or a chip system of the AP, or may be implemented by a logical module or software that can implement all or some functions of the AP. The method includes: before a first moment, receiving a physical layer protocol data unit (physical protocol data unit, PPDU) by using a first antenna pattern; and after the first moment, receiving the PPDU by using a second antenna pattern.

Based on the solution, during receiving of a single PPDU, the AP may sequentially use two antenna patterns to receive a same PPDU, in other words, the AP may perform antenna pattern switching during receiving of the single PPDU. The switching process does not need to depend on an RTS/CTS mechanism, in other words, a sender of the PPDU does not need to be learned of, to improve flexibility and applicability of the antenna pattern switching, and further improve receiving performance in a plurality of scenarios (for example, a scenario in which the RTS/CTS mechanism is not used and a scenario in which the RTS/CTS mechanism is used).

According to a second aspect, an antenna pattern switching method is provided. The method includes: A station (station, STA) sends a PPDU. Before a first moment, an AP receives a physical layer protocol data unit PPDU by using a first antenna pattern; and after the first moment, the AP receives the PPDU by using a second antenna pattern. For technical effects brought by the second aspect, refer to the technical effects brought by the first aspect. Details are not described herein again.

With reference to the first aspect or the second aspect, in a possible design, the first moment is in a first time domain resource, the first time domain resource is used for carrying a first field of the PPDU, and the first field is used for automatic gain control (automatic gain control, AGC) and/or synchronization. For example, the first field is a short training field or a synchronization field. The short training field is one of the following: a legacy short training field (legacy short training field, L-STF), a high throughput short training field (high throughput short training field, HT-STF), a high throughput greenfield short training field (high throughput greenfield short training field, HT-GF-STF), a very high throughput short training field (very high throughput short training field, VHT-STF), a high efficiency throughput short training field (high efficiency short training field, HE-STF), or an extremely high throughput short training field (extremely high throughput short training field, EHT-STF).

With reference to the first aspect or the second aspect, in a possible design, the first moment is not later than a second moment, and the second moment is a start moment of the first time domain resource.

Based on the possible design, the AP completes antenna pattern switching before a start moment of a time domain resource carrying the first field. Because the first field is used for AGC and/or synchronization, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

With reference to the first aspect or the second aspect, in a possible design, the first moment is not later than a second moment, duration between the second moment and an end moment of the first time domain resource is longer than or equal to first duration, and the first duration is duration needed for performing AGC and/or synchronization.

Based on the possible design, the AP completes antenna pattern switching before the second moment. Because duration between the second moment and an end moment of a time domain resource carrying the first field is longer than the duration needed for performing AGC, and the first field is used for AGC, the AP can complete AGC after the second moment and before the end moment of the time domain resource carrying the first field. In other words, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

With reference to the first aspect or the second aspect, in a possible design, the first moment is in a first time domain resource, the first time domain resource is used for carrying the first field of the PPDU, and the first field indicates a reception parameter of the PPDU. For example, the reception parameter of the PPDU may include a reception parameter of data and/or signaling of the PPDU.

Generally, a field indicating the reception parameter of the data of the PPDU is located before a field used for AGC. Therefore, based on the possible design, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

With reference to the first aspect or the second aspect, in a possible design, the first moment is not later than a second moment, the second moment is a start moment of a second time domain resource, the second time domain resource is used for carrying a second field of the PPDU, and the second field is used for AGC and/or synchronization.

With reference to the first aspect or the second aspect, in a possible design, the first moment is not later than a second moment, duration between the second moment and an end moment of a second time domain resource is longer than or equal to first duration, the second time domain resource is used for carrying a second field of the PPDU, the second field is used for AGC and/or synchronization, and the first duration is duration needed for performing AGC and/or synchronization.

With reference to the first aspect or the second aspect, in a possible design, the method further includes: determining the second antenna pattern based on first signal quality, where the first signal quality is signal quality of the PPDU received before the first moment.

Based on the possible design, during receiving of the PPDU, the AP determines a target antenna pattern (that is, the second antenna pattern) based on the signal quality of the received PPDU, without learning of an identifier of a current STA or depending on an RTS frame, to improve flexibility and applicability of the antenna pattern switching. In addition, during receiving of the PPDU, the AP determines the target antenna pattern in real time by using signal received quality of the PPDU, to improve adaptability of the target antenna pattern and further improve receiving performance.

With reference to the first aspect or the second aspect, in a possible design, determining the second antenna pattern based on the first signal quality includes: when the first signal quality is greater than or equal to a first threshold, determining the second antenna pattern based on the first signal quality and a mapping relationship between a signal quality range and an antenna pattern.

Based on the possible design, the target antenna pattern may be determined based on the signal quality of the PPDU and the mapping relationship between the signal quality range and the antenna pattern. In comparison with a manner of repeatedly sending an RTS/CTS frame and a manner of traversing phase shift combinations, training overheads of the target antenna pattern are reduced.

With reference to the first aspect or the second aspect, in a possible design, when the first signal quality is greater than or equal to the first threshold, the second antenna pattern is an antenna pattern corresponding to a first signal quality range, and the first signal quality is in the first signal quality range.

With reference to the first aspect or the second aspect, in a possible design, determining the second antenna pattern based on the first signal quality includes: determining an index of the second antenna pattern based on the first signal quality, a second signal quality range, and a quantity of antenna patterns, where the second signal quality range is a constraint range of a signal quality measurement quantity; and determining the second antenna pattern based on the index of the second antenna pattern and a mapping relationship between an index of the antenna pattern and the antenna pattern.

Based on the possible design, the target antenna pattern may be determined based on the signal quality of the PPDU and the mapping relationship between the index and the antenna pattern. In comparison with a manner of repeatedly sending an RTS/CTS frame and a manner of traversing phase shift combinations, training overheads of the target antenna pattern are reduced.

With reference to the first aspect or the second aspect, in a possible design, the index of the second antenna pattern satisfies the following relationship:

$$index = \begin{cases} 0, & M \le M_{min} \\ ceil[(N-2) \times \dfrac{M - M_{min}}{M_{max} - M_{min}}], & M_{min} < M < M_{max} \\ N - 1, & M \ge M_{max} \end{cases}$$

M represents the first signal quality, $M_{min}$ represents a minimum value of the second signal quality range, $M_{max}$ represents a maximum value of the second signal quality range, ceil(*) represents rounding up, and N represents the quantity of antenna patterns.

With reference to the first aspect or the second aspect, in a possible design, the first antenna pattern is an omnidirectional antenna pattern. When the second signal quality is greater than or equal to a second threshold, the second antenna pattern is a directional antenna pattern. The second signal quality is the signal quality of the PPDU received before the first moment.

According to a third aspect, a communication apparatus is provided, to implement the foregoing methods. The communication apparatus includes corresponding modules, units, or means (means) for implementing the methods. The modules, units, or means may be implemented by hardware, software, or hardware executing corresponding software. The hardware or the software includes one or more modules or units corresponding to functions.

In a possible design, the communication apparatus includes an interface module. Further, the communication apparatus may further include a processing module. The interface module may be configured to implement a receiving function and a sending function in any one of the foregoing aspects and the possible implementations of the foregoing aspects. The processing module may be configured to implement a processing function in any one of the foregoing aspects and the possible implementations of the foregoing aspects.

In a possible design, the interface module may include a transceiver circuit, a transceiver machine, a transceiver, a communication interface, or an interface circuit.

According to a fourth aspect, a communication apparatus is provided, and includes a processor and a memory. The memory is configured to store computer instructions, and when the processor executes the instructions, the communication apparatus is caused to perform the method in either of the aspects.

According to a fifth aspect, a communication apparatus is provided, and includes a processor and a communication interface. The communication interface is configured to communicate with a module outside the communication apparatus, and the processor is configured to execute a computer program or instructions, to cause the communication apparatus to perform the method in either of the foregoing aspects.

According to a sixth aspect, a communication apparatus is provided, and includes at least one processor. The processor is configured to execute a computer program or instructions stored in a memory, to cause the communication apparatus to perform the method in either of the foregoing aspects. The memory may be coupled to the processor, or may be independent of the processor.

According to a seventh aspect, a computer-readable storage medium is provided. The computer-readable storage medium stores a computer program or instructions. When the computer program or the instructions are run on a communication apparatus, the communication apparatus is caused to perform the method in either of the foregoing aspects.

According to an eighth aspect, a computer program product including instructions is provided. When the computer program product is run on a communication apparatus, the communication apparatus is caused to perform the method in either of the foregoing aspects.

According to a ninth aspect, a communication apparatus (for example, the communication apparatus may be a chip or a chip system) is provided. The communication apparatus includes a processor, configured to implement the functions in either of the aspects.

In some possible designs, the communication apparatus further includes a memory, and the memory is configured to store necessary program instructions and data.

In some possible designs, when the apparatus is a chip system, the apparatus may include a chip, or may include a chip and another discrete device.

It may be understood that the communication apparatus in any one of the third aspect to the ninth aspect may be the AP in the first aspect or the second aspect, may be a module applied to the AP, for example, a processor, a chip, or a chip system of the AP, or may be a logical module that can implement all or some functions of the AP.

It may be understood that when the communication apparatus in any one of the third aspect to the ninth aspect is a chip, a sending action/function of the communication apparatus may be understood as outputting information, and a receiving action/function of the communication apparatus may be understood as inputting information.

For technical effects brought by any design of the third aspect to the ninth aspect, refer to the technical effects brought by different designs of the first aspect and the second aspect. Details are not described herein again.

According to a tenth aspect, a communication system is provided. The communication system includes the AP and the STA in the second aspect.

## BRIEF DESCRIPTION OF DRAWINGS

FIG. 1 is a schematic flowchart of a carrier sense multiple access with collision avoidance (carrier sense multiple access with collision avoidance, CSMA/CA) mechanism according to this application;
FIG. 2 is a diagram of a scenario of a hidden node problem according to this application;
FIG. 3 is a diagram of a frame structure of a PPDU according to this application;
FIG. 4 is a diagram of antenna pattern switching according to this application;
FIG. 5 is a schematic flowchart of antenna pattern determining according to this application;
FIG. 6 is a diagram of a structure of a communication system according to this application;
FIG. 7 is a schematic flowchart of an antenna pattern switching method according to this application;
FIG. 8 to FIG. 13 are diagrams of several antenna pattern switching moments according to this application;
FIG. 14 is a schematic flowchart of another antenna pattern switching method according to this application;
FIG. 15 is a schematic flowchart of still another antenna pattern switching method according to this application;
FIG. 16 is a diagram of another antenna pattern switching moment according to this application;
FIG. 17 is a diagram of a structure of a communication apparatus according to this application; and
FIG. 18 is a diagram of a structure of another communication apparatus according to this application.

## DESCRIPTION OF EMBODIMENTS

In descriptions of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

In addition, in the descriptions of this application, "a plurality of" means two or more unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, the terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the term "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, various embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, both "when" and "if" mean that corresponding processing is performed in an objective situation, are not intended to limit time, do not require a determining action during implementation, and do not mean any other limitation.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, mutual reference may be made between same or similar parts of various embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding of the technical solutions in embodiments of this application, the following first briefly describes related technologies or terms in this application.

1. Listen before talk (listen before talk, LBT) mechanism

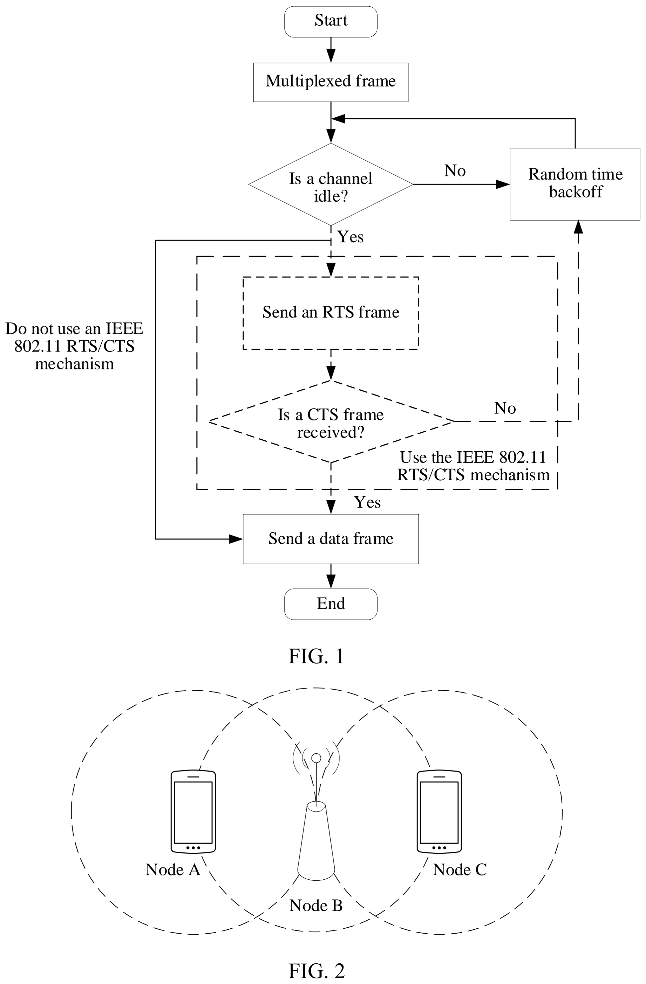

In a wireless local area network (wireless local area network, WLAN) system, an LBT mechanism is implemented based on a carrier sense multiple access with collision avoidance (carrier sense multiple access with collision avoidance, CSMA/CA) protocol. As shown in FIG. 1, the LBT mechanism requires that a channel be listened on before a data frame is transmitted, clear channel assessment is performed, and data transmission is performed when it is ensured that the channel is idle. If the channel is busy, random time backoff is performed.

However, the LBT mechanism may cause a hidden node problem. For example, as shown in FIG. 2, there are three intra-frequency nodes A, B, and C. The node A and the node B, and the node B and the node C may detect signals sent by each other. The node A and the node C cannot detect signals sent by each other due to a distance, an obstacle, or the like. In this case, if the node A and the node C simultaneously send signals, a conflict occurs when the node B receives a signal. The problem is the hidden node problem.

To resolve the hidden node problem, the industry defines a CSMA/CA protocol with a request to send (request to send, RTS)/clear to send (clear to send, CTS) mechanism (where RTS/CTS is optional in the CSMA/CA protocol). As shown in FIG. 1, in the protocol, after detecting that the channel is idle, a sending node first sends an RTS frame, and waits to receive a CTS frame. The RTS frame requires a non-target node that receives the RTS frame to stop sending a data frame. After receiving the RTS frame, a target node sends the CTS frame to respond to the RTS frame. The CTS frame also requires a non-target node that receives the CTS frame to stop sending a data frame. After receiving the CTS frame, the sending node sends a data frame. If the sending node does not receive the CTS frame, random time backoff is performed.

Based on the example shown in FIG. 2, when the RTS/CTS mechanism is used, and the node A needs to send a data frame to the node B, the node A first sends an RTS frame whose target node is the node B. After receiving the RTS frame, the node B sends a CTS frame whose target node is the node A. Because the node B and the node C may detect the signals sent by each other, the CTS frame may be received by the node C, so that the node C may stop sending a data frame in a period of time based on the CTS frame. Further, in a subsequent process in which the node A sends a data frame to the node B, a received signal of the node B is not interfered by the node C.

2. Frame structure of a physical layer protocol data unit (physical protocol data unit, PPDU)

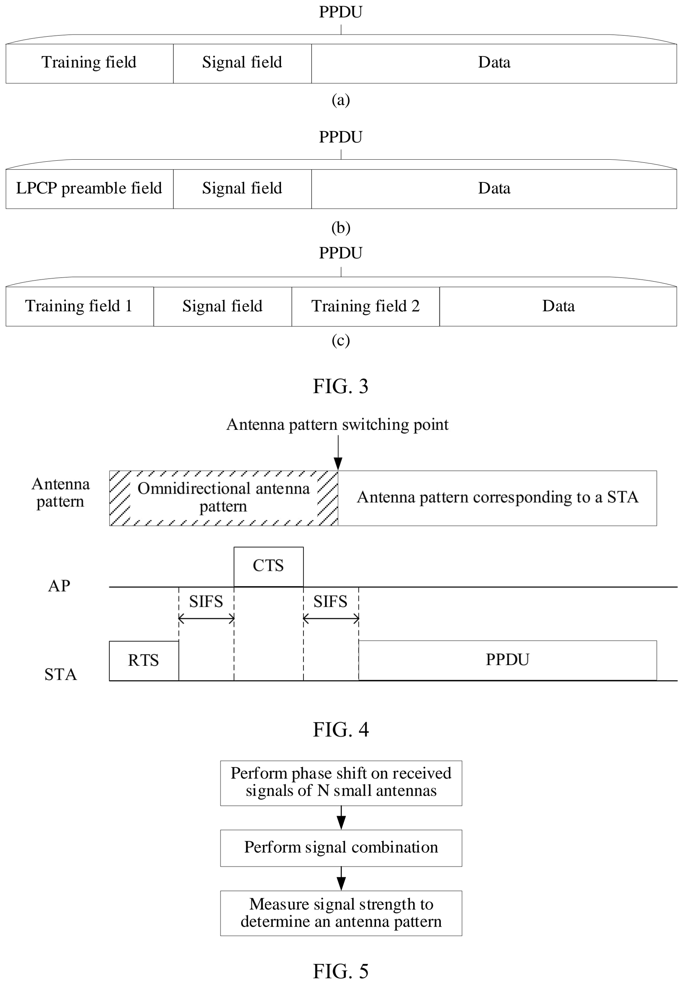

As shown in (a) in FIG. 3, a frame structure of a PPDU in an 802.11a protocol is shown, and includes three parts: a training field, a signal field, and a data field. The training field may be used for gain calibration at a receive end. The signal field is used for carrying configuration information for data transmission. The data field is used for carrying data.

As shown in (b) in FIG. 3, a frame structure of a PPDU in an 802.11b protocol is shown, and includes three parts: a physical layer convergence protocol (physical layer convergence protocol, LPCP) preamble (preamble) field, a signal field, and a data field. The LPCP preamble field may include a synchronization (SYNC) field and a start frame delimiter field.

As shown in (c) in FIG. 3, a frame structure of a PPDU in the 802.11n/802.11ac/802.11ax/802.11be protocol is shown, and includes a training field 1, a signal field, a training field 2, and a data field. The training field 1 may be used for gain calibration of the signal field, and the training field 2 may be used for gain calibration of the data field.

It should be noted that (c) in FIG. 3 merely shows an example of an upper frame structure of the PPDU in an 802.11n/802.11ac/802.11ax/802.11be protocol. In different protocols, each field may have different implementations. For example, in the 802.11n/802.11ac/802.11ax/802.11be protocol, the training field 1 may include a legacy short training field (legacy short training field, L-STF). In another 802.11n protocol, the training field 1 may include a high throughput greenfield short training field (high throughput greenfield short training field, HT-GF-STF). For another example, in an 802.11n protocol, the training field 2 may include a high throughput short training field (high throughput short training field, HT-STF) and the like. In the 802.11 ac protocol, the training field 2 may include a very high throughput short training field (very high throughput short training field, VHT-STF) and the like. In the 802.11ax protocol, the training field 2 may include a high efficiency short training field (high efficiency short training field, HE-STF) and the like. In the 802.11be protocol, the training field 2 may include an extremely high throughput short training field (extremely high throughput short training field, EHT-STF) and the like.

It should be noted that FIG. 3 merely describes an example of a frame structure of a PPDU in each protocol. For a detailed implementation, refer to descriptions in a related protocol. Details are not described herein.

3. Antenna pattern (pattern)

In embodiments of this application, an antenna pattern represents, indicates, or corresponds to a combination of states of a plurality of antenna elements. For example, a state of an antenna element may be an on/off state of the antenna element.

An antenna includes an antenna array. The antenna array is an array including a series of small antennas. Each small antenna may include at least one antenna element. A switch of each antenna element may be independently controlled.

Each small antenna may be an omnidirectional antenna or a directional antenna. An arrangement mode of small antennas is related to gains, polarization modes, directivity patterns, and the like of the small antennas.

A quantity of small antennas and a quantity of antenna elements in the antenna array may determine a quantity of antenna patterns. For example, if a device supporting a WLAN 802.11 protocol has four small antennas in a 2.4 gigahertz (GHz) frequency band and 12 small antennas in a 5 GHz frequency band, an entire antenna system includes 16 small antennas. It is assumed that four antenna elements are evenly distributed in a horizontal 360° range of each small antenna, and a switch of each antenna element may be independently controlled. In the 2.4 GHz frequency band, there are four small antennas and 16 antenna elements in total, corresponding to $2^{16}$ antenna patterns. In the 5 GHz frequency band, there are 12 small antennas and 48 antenna elements in total, corresponding to $2^{48}$ antenna patterns.

Currently, in a WLAN system, based on an RTS/CTS mechanism of an 802.11 protocol, an access point (access point, AP) separately sends RTS frames by using different antenna patterns, and selects an optimal antenna pattern for a station (station, STA) based on signal quality of a CTS frame fed back by the STA. Subsequently, the AP receives data of a specific STA by using an optimal antenna pattern corresponding to the STA.

For example, the AP may separately send RTS frames to the STA by using a plurality of antenna patterns, and after receiving the RTS frames, the STA sends a CTS frame to the AP. The AP measures a received signal strength indicator (received signal strength indicator, RSSI) or a signal-to-noise ratio (signal-to-noise ratio, SNR) of the CTS frame and uses the RSSI or the SNR of the CTS frame as the basis for determining the optimal antenna pattern. Finally, the AP determines the optimal antenna pattern of the STA based on the RSSI or the SNR of the CTS frame in the antenna patterns.

After the optimal antenna pattern of each STA is determined, during uplink transmission, as shown in FIG. 4, the AP may first receive an RTS frame from a specific STA by using an omnidirectional antenna pattern, and send a CTS frame after a minimum interframe space (short interframe space, SIFS). After sending of the CTS frame is completed, for example, during an SIFS between the CTS frame and the PPDU, the AP may switch to an optimal antenna pattern corresponding to the STA, and subsequently receive, by using the optimal antenna pattern, a PPDU sent by the STA. The AP may determine, based on the RTS frame, a specific STA that is to send a PPDU, in other words, determine an identifier of the STA, to learn that the AP needs to switch to an optimal antenna pattern corresponding to the STA.

Based on the descriptions above, in the method shown in FIG. 4, if the antenna pattern corresponding to the STA needs to be used during uplink receiving, the STA is required to first send the RTS frame before sending a data frame, so that the AP can learn of the identifier of the STA, to switch to the antenna pattern corresponding to the STA. However, the RTS/CTS mechanism is an optional mechanism. In an actual network, most STAs do not send an RTS frame before sending a data frame. As a result, use of the foregoing solution is limited. In addition, during determining of the optimal antenna pattern, the RTS frame and the CTS frame need to be repeatedly sent between the AP and each STA, causing high training overheads of the antenna pattern.

In addition to the foregoing method for determining the optimal antenna pattern based on the signal quality of the CTS frame, the AP may further determine the optimal antenna pattern by using a method shown in FIG. 5. Refer to FIG. 5. During uplink receiving, the AP may perform phase shift on received signals of N small antennas included in the antenna array. A value of a phase offset may be an integer multiple of 360°/N. Then, values that are obtained through phase shift and that correspond to the N small antennas are combined, and signal strength of a combined signal is measured. When the signal strength is greater than a threshold, an antenna pattern is determined based on current phase offsets of the small antennas. Otherwise, phase shift continues to be performed on the received signals, several phase combinations greater than the threshold are determined by traversing all phase offset combinations, and then one of the phase combinations is selected based on a phase combination result to determine a final antenna pattern.

When the antenna pattern determined based on the method shown in FIG. 5 is applied to a subsequent process of receiving a data frame, the AP still needs to learn of an identifier of a sender of the data frame, in other words, the STA is still required to send an RTS frame before sending the data frame. As a result, use of the optimal antenna pattern is also limited. In addition, the antenna pattern is determined by searching for or traversing the phase shift combinations, causing high training overheads of the antenna pattern.

Based on this, this application provides an antenna pattern switching method, to perform antenna pattern switching during receiving of a data frame without depending on an RTS/CTS mechanism, so as to improve flexibility and applicability of the antenna pattern switching, and further improve receiving performance in a plurality of scenarios (for example, a scenario in which the RTS/CTS mechanism is not used and a scenario in which the RTS/CTS mechanism is used). In addition, in the method provided in this application, training overheads of an antenna pattern can be further reduced.

The following describes the solutions of this application with reference to the accompanying drawings. Embodiments of this application are applicable to a WLAN scenario, and are applicable to an Institute of Electrical and Electronics Engineers (Institute of Electrical and Electronics Engineers, IEEE) 802.11 system standard, for example, an 802.11a/b/g standard, an 802.11n standard, an 802.11ac standard, an 802.11ax standard, a next-generation standard thereof, for example, an 802.11be standard, also referred to as a Wi-Fi 7 or extremely high throughput (extremely high throughput, EHT) standard, or a next-generation 802.11be standard, for example, Wi-Fi 8 or Wi-Fi artificial intelligence (artificial intelligence, AI). Alternatively, embodiments of this application are applicable to another system, for example, Bluetooth or ZigBee (ZigBee), that uses contention access, an LBT mechanism, a CSMA/CA mechanism, or a physical layer pilot preamble in a frame structure.

Alternatively, embodiments of this application are applicable to or modified appropriately to be applicable to a wireless local area network system, for example, an internet of things (internet of things, IoT) system or a vehicle to everything (Vehicle to X, V2X) system. Certainly, embodiments of this application are further applicable to another possible communication system, for example, a long term evolution (long term evolution, LTE) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future mobile communication system.

The communication systems and the communication scenarios to which this application is applicable are merely examples for description. The communication systems and the communication scenarios to which this application is applicable are not limited thereto. This is uniformly described herein. Details are not described below again.

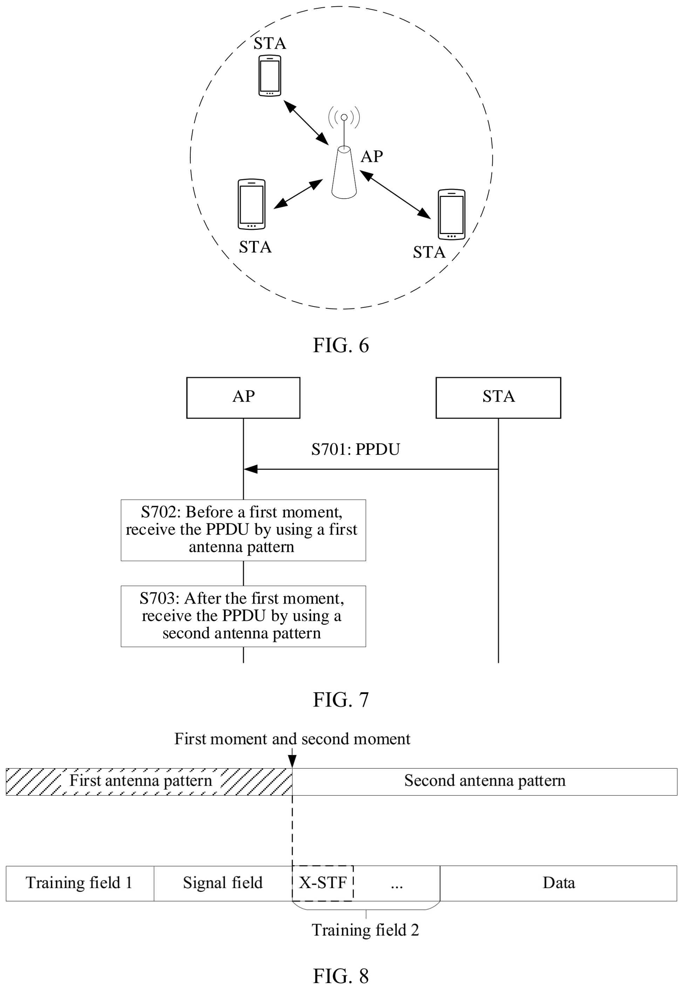

The following uses only a communication system shown in FIG. 6 as an example to describe the method provided in embodiments of this application. FIG. 6 shows a communication system according to an embodiment of this application. The communication system includes an access point station (access point station, AP STA) and at least one non-access point station (non-access point station, non-AP STA). For ease of description, in following embodiments of this application, the AP STA is referred to as an AP for short, and the non-AP STA is referred to as a STA for short.

For example, the method provided in embodiments of this application may be applied to a process in which the AP receives a PPDU sent by the STA.

The AP in this embodiment of this application may be an apparatus that is deployed in a wireless communication network and that provides a wireless communication function for a STA associated with the AP, and may be an access point for a mobile user to enter a wired network. The AP, with a typical coverage radius of tens to hundreds of meters, is mainly deployed in a home, a building, and a campus, and certainly, may be deployed outdoors. The AP is equivalent to a bridge that connects a wired network and a wireless network. A main function of the AP is to connect various wireless network clients together and then connect the wireless network to an ethernet. Specifically, the AP may be a communication device with a Wi-Fi chip, for example, a base station, a router, a gateway, a repeater, a communication server, a switch, or a bridge. The base station may include macro base stations, micro base stations, relay stations, and the like in various forms. In addition, the AP may support an 802.11be standard or a next-generation 802.11be standard. The AP may alternatively support a plurality of WLAN standards such as 802.11ax, 802.11ac, 802.11n, 802.11g, 802.11b, and 802.11a.

The STA in this embodiment of this application may be a wireless communication chip, a wireless sensor, or a wireless communication terminal, for example, a user terminal, a user apparatus, an access apparatus, a subscriber station, a subscriber unit, a mobile station, a user agent, and user equipment supporting a Wi-Fi communication function. The user terminal may include various devices having a wireless communication function, for example, a handheld device, a vehicle-mounted device, a wearable device, an IoT device, a computing device, another processing device connected to a wireless modem, user equipment (user equipment, UE) in various forms, a mobile station (mobile station, MS), a terminal (terminal), terminal equipment (terminal equipment), a portable communication device, a handheld apparatus, a portable computing device, an entertainment device, a game device or system, a global positioning system device, or any other suitable device configured to perform network communication through a wireless medium. In addition, the STA may support 802.11be or the next-generation 802.11be standard. The STA may alternatively support a plurality of WLAN standards such as 802.11ax, 802.11ac, 802.11n, 802.11g, 802.11b, and 802.11a.

The following describes in detail the method provided in embodiments of this application. It may be understood that, in embodiments of this application, the AP or the STA may perform some or all of steps in embodiments of this application. These steps or operations are merely examples. In embodiments of this application, other operations or variations of various operations may be further performed. In addition, the steps may be performed in a sequence different from that presented in embodiments of this application, and not all operations in embodiments of this application may be necessarily performed. In the following embodiments of this application, method steps performed by the AP may alternatively be performed by a module used in the AP, for example, a processor, a chip, or a chip system of the AP, or may be implemented by a logical module or software that can implement all or some functions of the AP. The method steps performed by the STA may alternatively be performed by a module used in the STA, for example, a processor, a chip, or a chip system of the STA, or may be implemented by a logical module or software that can implement all or some functions of the STA.

It should be noted that names of fields provided in the following embodiments of this application are merely examples for description, and the fields may have other names. The names of the fields are not specifically limited in this application. Names of messages between devices, names of parameters in the messages, or the like in the following embodiments of this application are merely examples, and there may be other names in a specific implementation. This is not specifically limited in embodiments of this application.

FIG. 7 shows an antenna pattern switching method according to an embodiment of this application. The antenna pattern switching method includes the following steps.

S701: A STA sends a PPDU.

In a possible implementation, the PPDU may be a PPDU in any 802.11 protocol in any WLAN standard 802.11 series protocol. For example, the PPDU may be a PPDU in 802.11a, 802.11b, 802.11ax, 802.11ac, 802.11n, 802.11g, 802.11be, a next-generation 802.11 be protocol, or a subsequently evolved WLAN protocol.

For example, the PPDU may also be referred to as a data frame. Certainly, the PPDU may alternatively have another name. A name of the PPDU is not specifically limited in this application. Alternatively, the PPDU may be replaced with another data frame having a frame structure similar to that of the PPDU.

S702: Before a first moment, an AP receives the PPDU by using a first antenna pattern.

In a possible implementation, step S702 may be understood as follows: Before the first moment, the AP receives, by using the first antenna pattern, a bit that is of the PPDU and that is before the first moment. For example, it is assumed that a start location of a time domain resource carrying the PPDU is a moment a, an end location of the time domain resource is a moment b, and the first moment is a moment c. In this case, step S702 is as follows: The AP receives, by using the first antenna pattern, a bit that is of the PPDU carried on the time domain resource and that is between the moment a and the moment c.

In a possible implementation, the first antenna pattern may be an omnidirectional antenna pattern, or may be one of a plurality of directional antenna patterns. When the antenna pattern is the omnidirectional antenna pattern, it may be considered that a coverage area of an antenna array is omnidirectional. When the antenna pattern is the directional antenna pattern, it may be considered that the coverage area of the antenna array is directional.

S703: After the first moment, the AP receives the PPDU by using a second antenna pattern.

The second antenna pattern is different from the first antenna pattern. For example, the second antenna pattern is a directional antenna pattern. Certainly, the second antenna pattern may alternatively be the same as the first antenna pattern. In this embodiment of this application, an example in which the second antenna pattern is different from the first antenna pattern is used for description.

In a possible implementation, step S703 may be understood as follows: After the first moment, the AP receives, by using the second antenna pattern, a bit that is of the PPDU and that is after the first moment. For example, based on the example in step S702, step S703 is as follows: The AP receives, by using the second antenna pattern, a bit that is of the PPDU carried on the time domain resource and that is between the moment c and the moment b.

Optionally, the first moment may be understood as an actual switching moment of an antenna pattern. To be specific, it may be considered that the AP switches the antenna pattern from the first antenna pattern to the second antenna pattern at the first moment.

In a possible implementation, antenna pattern switching may be implemented by using hardware or software, or may be implemented by using a combination of hardware and software. This is not specifically limited in this application.

In a possible implementation, the AP may implement antenna pattern switching by configuring control signaling or a control parameter. The control signaling or the control parameter is used for controlling the antenna pattern. For example, the control signaling or the control parameter may control a change of the antenna pattern by controlling an on/off state of at least one antenna element.

For example, the AP may include a plurality of antenna status registers. Each antenna status register corresponds to one antenna element, in other words, the antenna status register is in one-to-one correspondence with the antenna element. A value of a specific antenna status register may indicate an on/off state of a corresponding antenna element. For example, if the value of the antenna status register is "1", it indicates that the on/off state of the corresponding antenna element is on. If the value of the antenna status register is "0", it indicates that the on/off state of the corresponding antenna element is off. In the scenario, the control signaling or the control parameter may control the on/off state of the antenna element by configuring the value of the antenna status register.

Alternatively, for example, each antenna element may correspond to one level signal, in other words, the antenna element is in one-to-one correspondence with the level signal. The level signal may indicate the on/off state of the corresponding antenna element. For example, if the level signal is at a high level, it indicates that the on/off state of the corresponding antenna element is on. If the level signal is at a low level, it indicates that the on/off state of the corresponding antenna element is off. In the scenario, the control signaling or the control parameter may control the on/off state of the antenna element by configuring a level value of the level signal.

It should be noted that, the foregoing step S701, step S702, and step S703 may be performed simultaneously, in other words, in a process in which the STA sends the PPDU, the AP receives the PPDU through the foregoing steps S702 and S703.

In a possible implementation, after completing receiving processing on the PPDU, the AP may switch the antenna pattern back to an initial state, in other words, switch the antenna pattern from the second antenna pattern to the first antenna pattern. Alternatively, after completing receiving processing on the PPDU, the AP may need to return an acknowledgement (acknowledgement, ACK)/negative acknowledgement (negative acknowledgement, NACK) to the STA to feed back whether the PPDU is correctly received, or the STA may send a plurality of PPDUs in a packet transmission time period. Therefore, the antenna pattern may be kept as the second antenna pattern.

Based on the foregoing solution, during receiving of a single PPDU, the AP may sequentially use two antenna patterns to receive a same PPDU, in other words, the AP may perform antenna pattern switching during receiving of the single PPDU. The switching process does not need to depend on an RTS/CTS mechanism, in other words, a sender of the PPDU does not need to be learned of, to improve flexibility and applicability of the antenna pattern switching, and further improve receiving performance in a plurality of scenarios (for example, a scenario in which the RTS/CTS mechanism is not used and a scenario in which the RTS/CTS mechanism is used).

The foregoing describes an overall procedure of the antenna pattern switching method provided in this embodiment of this application. The following describes the first moment.

In a first possible implementation, the first moment is in a first time domain resource. The first time domain resource may be a segment of consecutive time domain resources, in other words, the first time domain resource has specific duration. That the first moment is in the first time domain resource may be understood as follows: The first moment is a start moment, an end moment, or a moment between the start moment and the end moment of the first time domain resource.

The first time domain resource is used for carrying a first field of the PPDU. The first field is used for AGC and/or synchronization. For example, the AGC may include power statistics collection and AGC level adjustment. The synchronization may be time synchronization and/or frequency synchronization between the AP and the STA.

In a possible implementation, the first field may be a short training field. In this case, the first field may be used for automatic gain control (automatic gain control, AGC), or may be used for AGC and synchronization. Alternatively, the first field may be a synchronization field. In this case, the first field may be used for synchronization. In other words, the AP may switch the antenna pattern in the short training field or the synchronization field of the PPDU.

For example, the short training field may be an L-STF or an HT-GF-STF, or may be an X-short training field (short training field, STF), that is, an X-STF. X represents an 802.11 protocol. For example, X may be HT, VHT, HE, or EHT, which respectively corresponds to an 802.11n, 802.11ac, 802.11ax, or 802.11be protocol. In other words, the short training field may alternatively be an HT-STF, a VHT-STF, an HE-STF, or an EHT-STF. Certainly, X may alternatively represent a next-generation WLAN protocol or a subsequently evolved WLAN protocol of 802.11be. In other words, the short training field may alternatively be an X-STF in the next-generation WLAN protocol or the subsequently evolved WLAN protocol of 802.11be.

In a possible implementation, the first moment is not later than a second moment. For example, the second moment may be understood as a latest moment of antenna pattern switching provided in this embodiment of this application.

In a possible implementation, the second moment is the start moment of the first time domain resource. In this case, it may be considered that the first moment is the same as the second moment, in other words, the first moment is also the start moment of the first time domain resource. In addition, the first field may be an X-STF field.

For example, the frame structure of the PPDU is shown in (c) in FIG. 3, and the X-STF is a 1st field in the training field 2. As shown in FIG. 8, the first moment and the second moment may be a start moment of a time domain resource carrying the training field 2.

Based on the possible implementation, the AP completes antenna pattern switching before a start moment of a time domain resource carrying the first field. Because the first field is used for AGC and/or synchronization, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

In another possible implementation, duration between the second moment and an end moment of the first time domain resource is longer than or equal to first duration. The first duration is duration needed for performing AGC and/or synchronization.

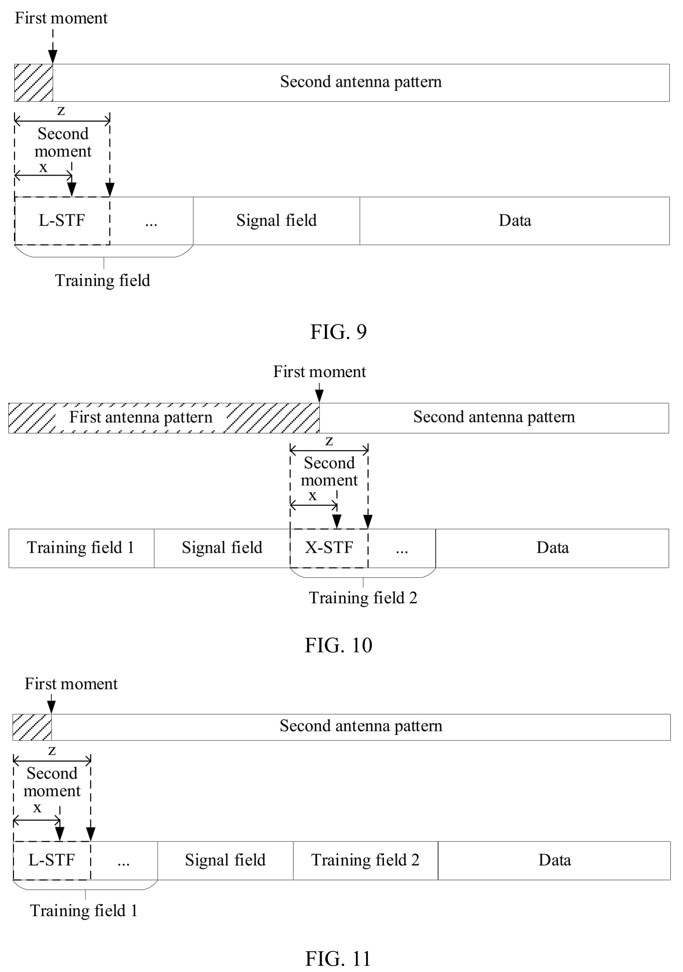

For example, the frame structure of the PPDU is shown in (a) in FIG. 3. As shown in FIG. 9, the first field may be an L-STF, and the L-STF field may be a 1st field in the training field. The first moment is in a time period x, and an end moment of the time period x is the second moment. $x \leq z - y$. z is duration of a time domain resource (that is, the first time domain resource) carrying the L-STF, and y is duration (that is, the first duration) needed for performing AGC and/or synchronization.

For example, the frame structure of the PPDU is shown in (c) in FIG. 3. As shown in FIG. 10, the first field may be an X-STF, and the X-STF may be a 1st field in the training field 2. The first moment is also in the time period x, and the end moment of the time period x is the second moment. $x \leq z - y$. z is duration of a time domain resource (that is, the first time domain resource) carrying the X-STF, and y is duration (that is, the first duration) needed for performing AGC and/or synchronization. In the example, z may be equal to 4 microseconds ($\mu$s).

For example, the frame structure of the PPDU is shown in (c) in FIG. 3. As shown in FIG. 11, the first field may be an L-STF or an HT-GF-STF, and the L-STF or the HT-GF-STF may be a 1st field in the training field 1. In FIG. 11, that the first field is the L-STF is used for description. The first moment is in a time period x, and an end moment of the time period x is the second moment. $x \leq z - y$. z is duration of a time domain resource (that is, the first time domain resource) carrying the L-STF, and y is duration (that is, the first duration) needed for performing AGC and/or synchronization. In the example, z may be equal to 8 microseconds.

Based on the possible implementation, the AP completes antenna pattern switching before the second moment. Because duration between the second moment and an end moment of a time domain resource carrying the first field is longer than the duration needed for performing AGC, and the first field is used for AGC, the AP can complete AGC after the second moment and before the end moment of the time domain resource carrying the first field. In other words, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

In a second possible implementation, the first moment is in the first time domain resource. The first time domain resource may be a segment of consecutive time domain resources, in other words, the first time domain resource has specific duration. That the first moment is in the first time domain resource may be understood as follows: The first moment is a start moment, an end moment, or a moment between the start moment and the end moment of the first time domain resource.

The first time domain resource is used for carrying a first field of the PPDU. The first field indicates a reception parameter of the PPDU, and the reception parameter of the PPDU may include a reception parameter of data and/or signaling of the PPDU. When the reception parameter of the PPDU includes the reception parameter of the data of the PPDU, it may also be considered that the first field is used for data receiving of the PPDU. For example, the first field may be a signal field. The reception parameter may include but is not limited to a bandwidth, a length, a transmission rate, and the like.

For example, the signal field may be any one of the following: a legacy signal field (legacy signal field, L-SIG), a repeated legacy signal field (repeated legacy signal field, RL-SIG), a high throughput signal field (high throughput signal field, HT-SIG), a very high throughput signal field A (very high throughput signal field A, VHT-SIG-A), a high efficiency signal field A (high efficiency signal field A, HE-SIG A), a high efficiency signal field B (high efficiency signal field B, HE-SIG B), a universal signal field (universal signal field, U-SIG), or an extremely high throughput signal field (extremely high throughput signal field, EHT-SIG).

In a possible implementation, the first moment is not later than a second moment. For example, the second moment may be understood as a latest moment of antenna pattern switching provided in this embodiment of this application.

In a possible implementation, the second moment is a start moment of a second time domain resource, and the second time domain resource is used for carrying a second field of the PPDU. The second field is used for AGC and/or synchronization. In the PPDU, the second field is located after the first field. For example, the second field may be an X-STF or a synchronization field. For the X-STF, refer to related descriptions in the first possible implementation. Details are not described herein again.

In another possible implementation, duration between the second moment and an end moment of a second time domain resource is longer than or equal to first duration. The first duration is duration needed for performing AGC and/or synchronization.

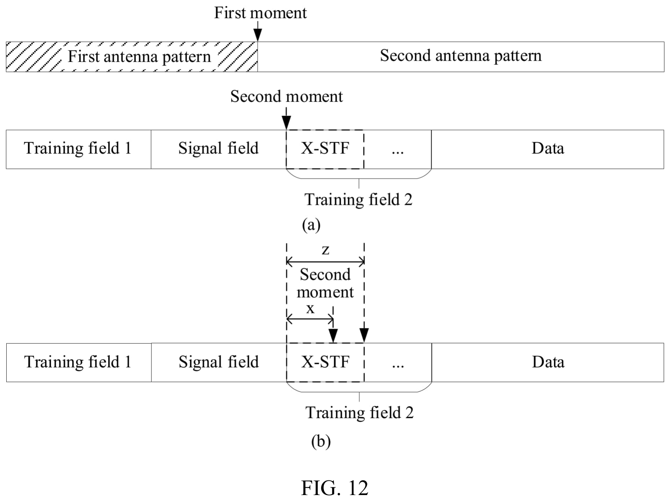

For example, the frame structure of the PPDU is shown in (c) in FIG. 3. As shown in (a) or (b) in FIG. 12, the first field is a signal field, and the second field is an X-STF field included in the training field 2. The first moment may be in a time domain resource (that is, the first time domain resource) carrying the signal field. In addition, in an example shown in (a) in FIG. 12, the second moment is a start moment of a time domain resource (that is, the second time domain resource) carrying the X-STF field. In an example shown in (b) in FIG. 12, duration between the second moment and a time domain resource carrying the X-STF field is longer than or equal to the first duration, and the second moment is in a time period x. $x \leq z - y$. z is duration of the time domain resource (that is, the second time domain resource) carrying the X-STF, and y is duration (that is, the first duration) needed for performing AGC and/or synchronization.

Based on the possible implementation, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

In a third possible implementation, the first moment is not later than a third moment. Duration between the third moment and an end moment of a third time domain resource is longer than or equal to first duration. The third time domain resource is a time domain resource carrying an X-STF field of the PPDU. The first duration is duration needed for performing AGC and/or synchronization.

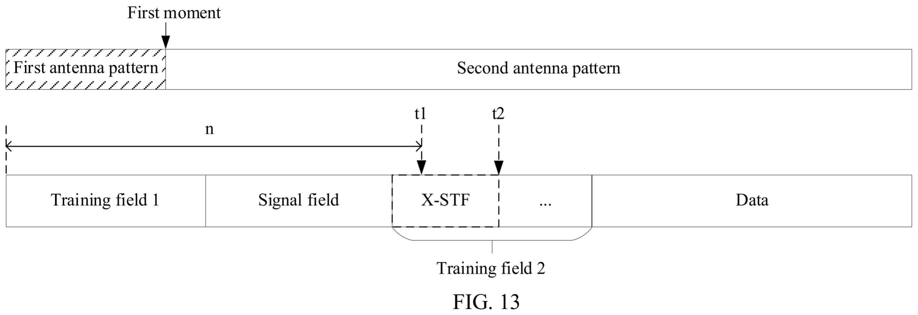

For example, the frame structure of the PPDU is shown in (c) in FIG. 3. As shown in FIG. 13, the third moment is t1, the end moment of the third time domain resource is t2, and duration between t1 and t2 is longer than or equal to the first duration. The first moment may be in a time period n.

It should be noted that FIG. 8 to FIG. 13 are merely examples of marking a location of the first moment. Certainly, the first moment may alternatively be at another location, provided that the first moment is not later than the second moment.

Based on the possible implementation, the AP completes antenna pattern switching before the third moment. Because duration between the third moment and the end moment of the time domain resource carrying the X-STF field is longer than the duration needed for performing AGC, and the X-STF field is used for AGC, the AP can complete AGC after the third moment and before the end moment of the time domain resource carrying the X-STF field. In other words, the AP can complete antenna pattern switching before performing AGC, in other words, first perform antenna pattern switching and then perform AGC. Therefore, when performing AGC, the AP can consider a received signal strength change and a channel change that are caused by the antenna pattern switching, and more accurately perform AGC level adjustment and the like, to improve receiving performance.

Based on the descriptions above, a latest switching moment of the antenna pattern is designed, so that when performing AGC, the AP can consider the received signal strength change and the channel change that are caused by the antenna pattern switching. If antenna pattern switching is performed for a data part of the PPDU, to be specific, the AP performs antenna pattern switching after performing an AGC operation, for example, power statistics collection and AGC level adjustment based on the STF, due to the received signal strength change and the channel change that are caused by the antenna pattern switching, an AGC level that has been obtained by the AP is destroyed, causing a power fluctuation before and after data receiving, and even an AGC lock failure. In addition, an error of a channel estimation result of a current PPDU is increased or even invalid. Therefore, in comparison with switching performed for the data part of the PPDU, the design solution of the latest switching moment in this application can improve AGC accuracy and further improve receiving performance.

The foregoing describes a switching moment of the antenna pattern. The following describes determining of the second antenna pattern.

In a possible implementation, the second antenna pattern may be determined based on first signal quality. The first signal quality may be signal quality of the PPDU received before the first moment. To be specific, the signal quality of the PPDU received before the first moment by using the first antenna pattern may be used for determining the second antenna pattern.

For example, the signal quality may be represented by an RSSI, an SNR, reference signal received power (reference signal received power, RSRP), reference signal received quality (reference signal received quality, RSRQ), or a signal to interference plus noise ratio (signal to interference plus noise ratio, SINR).

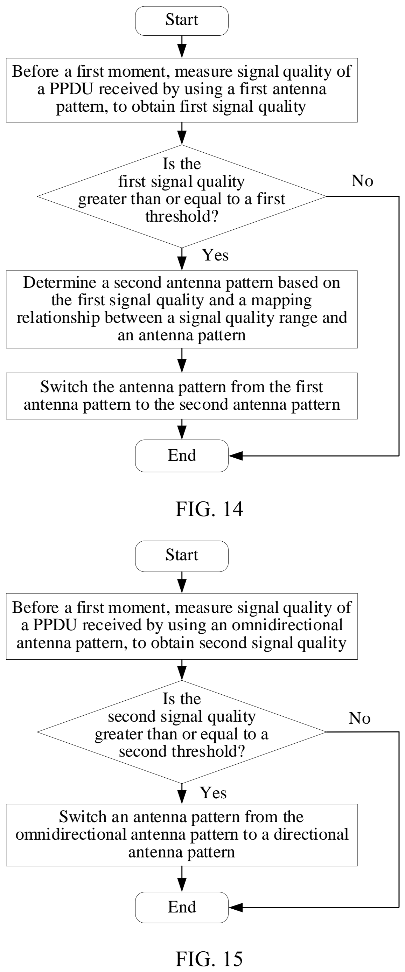

In a possible implementation, before the first moment, the AP may measure the signal quality of the PPDU received by using the first antenna pattern, to obtain the first signal quality. Then,

in a first possible implementation, as shown in FIG. 14, the AP may determine whether the first signal quality is greater than or equal to a first threshold. If the first signal quality is less than the first threshold, a procedure ends, and the PPDU is still received by using the first antenna pattern. If the first signal quality is greater than or equal to the first threshold, the second antenna pattern is determined based on the first signal quality.

For example, when the first signal quality is greater than or equal to the first threshold, the AP may determine the second antenna pattern based on the first signal quality and a mapping relationship between a signal quality range and an antenna pattern.

In a possible implementation, the mapping relationship between the signal quality range and the antenna pattern may be pre-determined by the AP, or may be defined in a protocol. This is not specifically limited in this application. The mapping relationship between the signal quality range and the antenna pattern may be represented in a form of Table 1.

Table 1

| Signal quality range | Antenna pattern |
|---|---|
| Signal quality range 1 | Antenna pattern 1 |
| Signal quality range | Antenna pattern |
| Signal quality range 2 | Antenna pattern 2 |
| ... | ... |
| Signal quality range N | Antenna pattern N |

In a possible implementation, the first threshold is related to the first antenna pattern. For example, the AP may pre-store a mapping relationship between the antenna pattern and a threshold, to obtain the first threshold based on the mapping relationship and the first antenna pattern. Alternatively, the first threshold may be a fixed value, in other words, regardless of which antenna pattern the first antenna pattern is, values of the first threshold are all the same.

In the first possible implementation, the second antenna pattern is an antenna pattern corresponding to a first signal quality range, and the first signal quality is in the first signal quality range. For example, after determining the first signal quality, the AP may first determine a signal quality range in which the first signal quality is, and then determine an antenna pattern corresponding to the signal quality range as the second antenna pattern.

In a second possible implementation, the AP may determine an index of the second antenna pattern based on the first signal quality, a second signal quality range, and a quantity of antenna patterns; and then determine the second antenna pattern based on the index of the second antenna pattern and a mapping relationship between an index of the antenna pattern and the antenna pattern.

In a possible implementation, the second signal quality range is a constraint range of a signal quality measurement quantity. The second signal quality range is greater than a first signal quality range, or the second signal quality range includes the first signal quality range. For example, a minimum value of the second signal quality range is a minimum value of the signal quality range 1 in Table 1, and a maximum value of the second signal quality range is a maximum value of the signal quality range N in Table 1.

In a possible implementation, the mapping relationship between the index of the antenna pattern and the antenna pattern may be pre-determined by the AP, or may be defined in a protocol. This is not specifically limited in this application. The mapping relationship between the index of the antenna pattern and the antenna pattern may be represented in a form of Table 2.

Table 2

| Index | Antenna pattern |
|---|---|
| Index 1 | Antenna pattern 1 |
| Index 2 | Antenna pattern 2 |
| ... | ... |
| Index N | Antenna pattern N |

For example, in the second possible implementation, the index *index* of the second antenna pattern satisfies the following relationship:

$$
index = \begin{cases} 0, & M \leq M_{min} \\ ceil[(N-2) \times \dfrac{M - M_{min}}{M_{max} - M_{min}}], & M_{min} < M < M_{max} \\ N-1, & M \geq M_{max} \end{cases}
$$

M represents the first signal quality, $M_{min}$ represents the minimum value of the second signal quality range, $M_{max}$ represents the maximum value of the second signal quality range, ceil(*) represents rounding up, and N represents the quantity of antenna patterns.

After determining the second antenna pattern based on the foregoing two manners, the AP may switch the antenna pattern from the first antenna pattern to the second antenna pattern, to receive the PPDU by using the second antenna pattern.

Based on the foregoing solution, during receiving of the PPDU, the AP determines a target antenna pattern (that is, the second antenna pattern) based on the signal quality of the received PPDU, without learning of an identifier of a current STA or depending on an RTS frame, to improve flexibility and applicability of the antenna pattern switching. In addition, the target antenna pattern may be determined based on the signal quality of the PPDU and the mapping relationship between the signal quality range and the antenna pattern, or the mapping relationship between the index and the antenna pattern. In comparison with a manner of repeatedly sending an RTS/CTS frame and a manner of traversing phase shift combinations, training overheads of the target antenna pattern are reduced.

In addition, in an existing RTS/CTS frame-based switching manner, an antenna pattern that corresponds to the STA and that is determined before the STA sends the PPDU is likely no longer applicable when the STA sends the PPDU. For example, it is assumed that before the STA sends the PPDU, the antenna pattern that corresponds to the STA and that is determined by the AP is the antenna pattern 1. After a period of time, the STA may move, and the STA sends the PPDU only after the STA moves. In this case, due to movement of the STA, a channel between the STA and the AP may change, and therefore, the antenna pattern determined before the movement is likely no longer applicable after the movement. Based on the foregoing method provided in this embodiment of this application, during receiving of the PPDU, the AP determines the target antenna pattern in real time by using signal received quality of the PPDU, to improve adaptability of the target antenna pattern and further improve receiving performance.

The foregoing method is applicable to a scenario in which the quantity of antenna patterns is greater than or equal to 2. In addition, in some scenarios, if the quantity of antenna patterns is equal to 2, one antenna pattern is an omnidirectional antenna pattern, and the other antenna pattern is a directional antenna pattern, the first antenna pattern may be an omnidirectional antenna pattern, and the second antenna pattern may be a directional antenna pattern.

In a possible implementation, as shown in FIG. 15, before the first moment, the AP may receive the PPDU by using the omnidirectional antenna pattern, and measure the signal quality of the PPDU received by using the omnidirectional antenna pattern, to obtain the second signal quality. In other words, the second signal quality is the signal quality of the PPDU received by using the omnidirectional antenna pattern before the first moment. When the second signal quality is greater than or equal to a second threshold, the antenna pattern is switched from the omnidirectional antenna pattern to the directional antenna pattern. For descriptions of other steps in FIG. 15, refer to the foregoing related descriptions. Details are not described herein again.

Optionally, the second threshold may be the same as or different from the first threshold. For an implementation of the second threshold, refer to related descriptions of the first threshold. Details are not described herein again.

In a possible implementation, in the scenario, the first moment is in the first time domain resource, and the first moment is not later than the second moment; or the first moment is not later than the third moment. For details, refer to related descriptions in the foregoing three implementations of the first moment. Details are not described herein again.

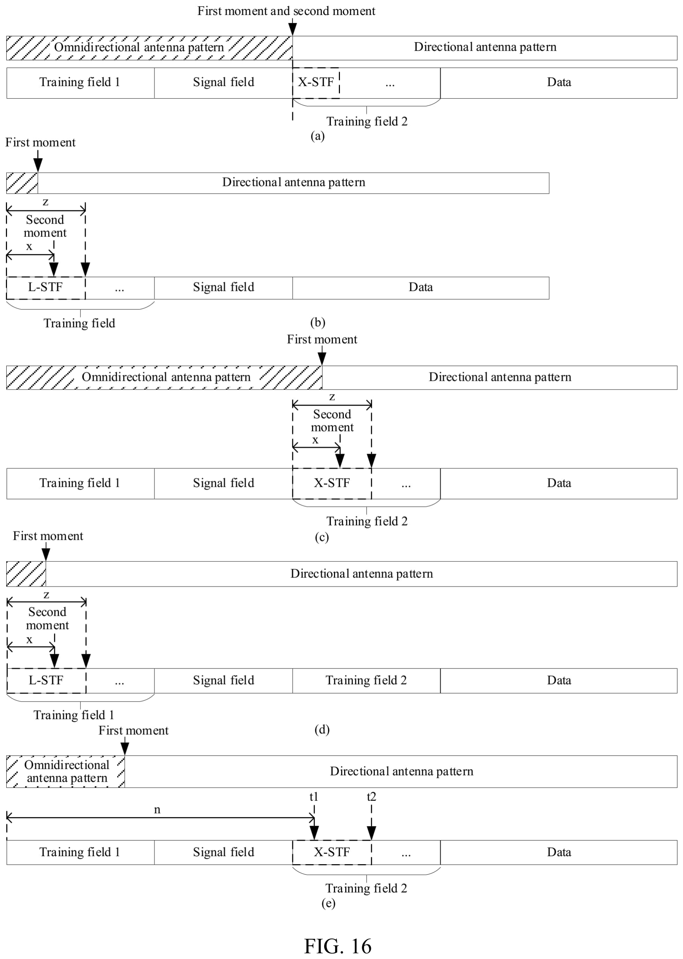

For example, in the scenario, the example shown in FIG. 8 may be transformed into (a) in FIG. 16, the example shown in FIG. 9 may be transformed into (b) in FIG. 16, the example shown in FIG. 10 may be transformed into (c) in FIG. 16, the example shown in FIG. 11 may be transformed into (d) in FIG. 16, and the example shown in FIG. 13 may be transformed into (e) in FIG. 16.

Based on the solution, whether to switch the antenna pattern from the omnidirectional antenna pattern to the directional antenna pattern may be determined based on comparison between the signal quality of the received PPDU and the threshold, without depending on an RTS/CTS mechanism, to improve flexibility and applicability of the antenna pattern switching, and further reduce implementation complexity.

It may be understood that, in the foregoing embodiments, the method and/or steps implemented by the AP may alternatively be implemented by a component (for example, a processor, a chip, a chip system, a circuit, a logical module, or software) that may be used in the AP, and the method and/or steps implemented by the STA may alternatively be implemented by a component (for example, a processor, a chip, a chip system, a circuit, a logical module, or software) that may be used in the STA. The chip system may include a chip, or the chip system may include a chip and another discrete device.

The foregoing mainly describes the solutions provided in this application. Correspondingly, this application further provides a communication apparatus. The communication apparatus is configured to implement the foregoing methods. The communication apparatus may be the AP in the foregoing method embodiments, an apparatus including the AP, or a component that may be used in the AP. Alternatively, the communication apparatus may be the STA in the foregoing method embodiments, an apparatus including the STA, or a component that may be used in the STA.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, another division manner may be used.

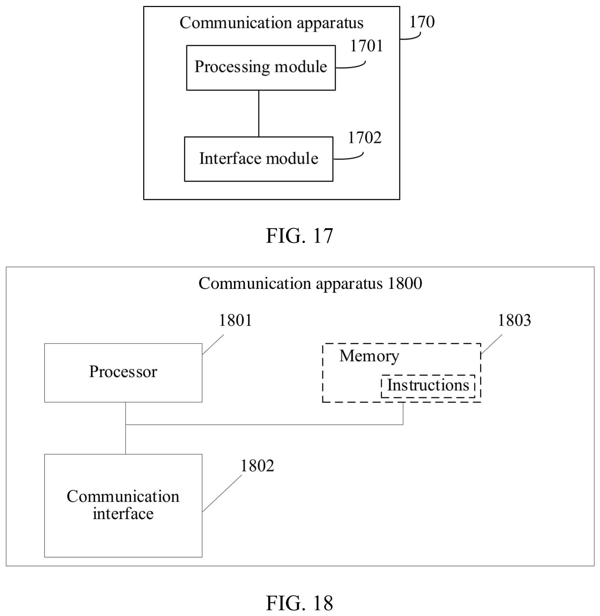

FIG. 17 is a diagram of a structure of a communication apparatus 170. The communication apparatus 170 includes a processing module 1701 and an interface module 1702. The communication apparatus 170 may be configured to implement functions of the AP.

In some embodiments, the communication apparatus 170 may further include a storage module (not shown in FIG. 17), configured to store program instructions and data.

In some embodiments, the interface module 1702 may alternatively be a transceiver unit, and is configured to implement a sending function and/or a receiving function. The interface module 1702 may include a transceiver circuit, a transceiver machine, a transceiver, or a communication interface.

In some embodiments, the interface module 1702 may be configured to perform receiving and sending steps performed by the AP in the foregoing method embodiments, and/or configured to support another process of the technology described in this specification. The processing module 1701 may be configured to perform processing (for example, determining) steps performed by the AP in the foregoing method embodiments, and/or configured to support another process of the technology described in this specification.

The interface module 1702 is configured to: before a first moment, receive a physical layer protocol data unit PPDU by using a first antenna pattern. The interface module 1702 is further configured to: after the first moment, receive the PPDU by using a second antenna pattern.

In a possible implementation, the processing module 1701 is configured to determine the second antenna pattern based on first signal quality, where the first signal quality is signal quality of the PPDU received before the first moment.

In a possible implementation, the processing module 1701 is specifically configured to: when the first signal quality is greater than or equal to a first threshold, determine the second antenna pattern based on the first signal quality and a mapping relationship between a signal quality range and an antenna pattern.

In a possible implementation, that the processing module 1701 is configured to determine the second antenna pattern based on the first signal quality includes: determining an index of the second antenna pattern based on the first signal quality, a second signal quality range, and a quantity of antenna patterns. The second signal quality range is a constraint range of a signal quality measurement quantity. The processing module 1701 is further configured to determine the second antenna pattern based on the index of the second antenna pattern and a mapping relationship between an index of an antenna pattern and an antenna pattern.

All related content of the steps in the foregoing method embodiments may be cited in function descriptions of the corresponding functional modules. Details are not described herein again.

In this application, the communication apparatus 170 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another device that can provide the foregoing functions.

In some embodiments, when the communication apparatus 170 in FIG. 17 is a chip or a chip system, a function/implementation process of the interface module 1702 may be implemented through an input/output interface (or a communication interface) of the chip or the chip system, and a function/implementation process of the processing module 1701 may be implemented through a processor (or a processing circuit) of the chip or the chip system.

Because the communication apparatus 170 provided in this embodiment may perform the foregoing methods, for a technical effect that can be achieved by the communication apparatus 170, refer to the foregoing method embodiments. Details are not described herein again.

In a possible product form, the AP in this embodiment of this application may be further implemented by using one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

In another possible product form, the AP in this embodiment of this application may be implemented by a general bus architecture. For ease of description, FIG. 18 is a diagram of a structure of a communication apparatus 1800 according to an embodiment of this application. The communication apparatus 1800 includes a processor 1801 and a communication interface 1802. The communication apparatus 1800 may be an AP, or a chip or a chip system in the AP. FIG. 18 shows only main components of the communication apparatus 1800. In addition to the processor 1801 and the communication interface 1802, the communication apparatus may further include a memory 1803 and an input/output apparatus (not shown in the figure).

In a possible implementation, the processor 1801 is mainly configured to process a communication protocol and communication data, control the entire communication apparatus, execute a software program, and process data of the software program. For example, the processor 1801 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1801 may be another apparatus having a processing function, for example, a circuit, a device, or a software module. This is not limited.

In a possible implementation, the memory 1803 may be an apparatus having a storage function, and is mainly configured to store a software program and data. For example, the memory 1803 may be a read-only memory (read-only memory, ROM) or another type of static storage device that may store static information and/or instructions; may be a random access memory (random access memory, RAM) or another type of dynamic storage device that may store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or the like. This is not limited.

It should be noted that the memory 1803 may exist independently of the processor 1801, or may be integrated with the processor 1801. The memory 1803 may be located inside the communication apparatus 1800, or may be located outside the communication apparatus 1800. This is not limited.

In a possible implementation, the communication interface 1802 is configured to communicate with another device or module or a communication network. For example, the communication interface 1804 may be an input/output interface, a module, a circuit, a transceiver, or any apparatus that can implement communication. For example, the transceiver may include a radio frequency circuit and an antenna. The radio frequency circuit is mainly configured to perform conversion between a baseband signal and a radio frequency signal, and process the radio frequency signal. The antenna is mainly configured to send and receive a radio frequency signal in a form of an electromagnetic wave.

In a possible implementation, the communication interface 1802 may alternatively be an input/output interface located in the processor 1801, and is configured to implement signal input and signal output of the processor.

In a possible implementation, the input/output apparatus, for example, a touchscreen, a display screen, or a keyboard, is mainly configured to receive data input by a user and output data to the user.

In a possible implementation, the processor 1801, the communication interface 1802, and the memory 1803 may be connected via a communication bus. The communication bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like.

In a possible implementation, after the communication apparatus is powered on, the processor 1801 may read the software program in the memory 1803, interpret and execute instructions of the software program, and process data of the software program. When data needs to be sent in a wireless manner, the processor 1801 performs baseband processing on the to-be-sent data, and then outputs a baseband signal to a radio frequency circuit. The radio frequency circuit performs radio frequency processing on the baseband signal, and then sends a radio frequency signal to the outside in a form of an electromagnetic wave via the antenna. When data is sent to the communication apparatus, the radio frequency circuit receives a radio frequency signal through the antenna, converts the radio frequency signal into a baseband signal, and outputs the baseband signal to the processor 1801; and the processor 1801 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 170 may be in a form of the communication apparatus 1800 shown in FIG. 18.

In an example, a function/implementation process of the processing module 1701 in FIG. 17 may be implemented by the processor 1801 in the communication apparatus 1800 shown in FIG. 18 by invoking the computer-executable instructions stored in the memory 1803. A function/an implementation process of the interface module 1702 in FIG. 17 may be implemented by the communication interface 1802 in the communication apparatus 1800 shown in FIG. 18.

**EP 4 693 941 A1**

It should be noted that the structure shown in FIG. 18 does not constitute a specific limitation on the AP. For example, in some other embodiments of this application, the AP may include more or fewer components than those shown in the figure, or some components are combined, or some components are split, or different component arrangements may be used. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another device) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the system, apparatuses, and methods described in this application may alternatively be implemented in another manner. For example, the foregoing apparatus embodiments are merely examples. For example, unit division is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, in other words, may be located together in the same place or distributed on a plurality of network units. Parts displayed as units may be or may not be physical units. Some or all of the units may be selected based on actual requirements to achieve the objectives of the solutions of embodiments.

In addition, functional units in various embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, the procedure or functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and the accompanying drawings are merely example description of this application defined by the appended claims, and are considered as any of or all modifications, variations, combinations or equivalents that cover the scope of this application. It is clearly that a person skilled in the art can make various modifications and variations to this application without departing from the spirit and scope of this application. In this case, provided that the modifications and variations made to this application fall within the scope of the claims of this application and equivalent techniques thereof, this application is also intended to cover such modifications and variations.

**Claims**

1. An antenna pattern switching method, wherein the method comprises:

   before a first moment, receiving a physical layer protocol data unit PPDU by using a first antenna pattern; and
   after the first moment, receiving the PPDU by using a second antenna pattern.

2. The method according to claim 1, wherein the first moment is in a first time domain resource, the first time domain resource is used for carrying a first field of the PPDU, and the first field is used for automatic gain control AGC and/or synchronization.

3. The method according to claim 2, wherein the first moment is not later than a second moment, and the second moment is a start moment of the first time domain resource.

4. The method according to claim 2, wherein the first moment is not later than a second moment, duration between the second moment and an end moment of the first time domain resource is longer than or equal to first duration, and the first duration is duration needed for performing AGC and/or synchronization.

5. The method according to claim 1, wherein the first moment is in a first time domain resource, the first time domain resource is used for carrying a first field of the PPDU, and the first field indicates a reception parameter of the PPDU.

6. The method according to claim 5, wherein the first moment is not later than a second moment, the second moment is a start moment of a second time domain resource, the second time domain resource is used for carrying a second field of the PPDU, and the second field is used for AGC and/or synchronization.

7. The method according to claim 5, wherein the first moment is not later than a second moment, duration between the second moment and an end moment of a second time domain resource is longer than or equal to first duration, the second time domain resource is used for carrying a second field of the PPDU, the second field is used for AGC and/or synchronization, and the first duration is duration needed for performing AGC and/or synchronization.

8. A communication apparatus, wherein the apparatus comprises an interface module, wherein

   the interface module is configured to: before a first moment, receive a physical layer protocol data unit PPDU by using a first antenna pattern; and
   the interface module is further configured to: after the first moment, receive the PPDU by using a second antenna pattern.

9. The apparatus according to claim 8, wherein the first moment is in a first time domain resource, the first time domain resource is used for carrying a first field of the PPDU, and the first field is used for automatic gain control AGC and/or synchronization.

10. The apparatus according to claim 9, wherein the first moment is not later than a second moment, and the second moment is a start moment of the first time domain resource.

11. The apparatus according to claim 9, wherein the first moment is not later than a second moment, duration between the second moment and an end moment of the first time domain resource is longer than or equal to first duration, and the first duration is duration needed for performing AGC and/or synchronization.

12. The apparatus according to claim 8, wherein the first moment is in a first time domain resource, the first time domain resource is used for carrying a first field of the PPDU, and the first field indicates a reception parameter of the PPDU.

13. The apparatus according to claim 12, wherein the first moment is not later than a second moment, the second moment is a start moment of a second time domain resource, the second time domain resource is used for carrying a second field of the PPDU, and the second field is used for AGC and/or synchronization.

14. The apparatus according to claim 12, wherein the first moment is not later than a second moment, duration between the second moment and an end moment of a second time domain resource is longer than or equal to first duration, the second time domain resource is used for carrying a second field of the PPDU, the second field is used for AGC and/or synchronization, and the first duration is duration needed for performing AGC and/or synchronization.

15. A communication apparatus, wherein the apparatus comprises at least one processor, and the at least one processor is configured to run a computer program or instructions, to cause the apparatus to perform the method according to any one of claims 1 to 7.

16. A computer-readable storage medium, wherein the computer-readable storage medium stores computer instructions or a program, and when the computer instructions or the program is run on a communication apparatus, the method according to any one of claims 1 to 7 is performed.

17. A computer program product, wherein the computer program product comprises computer instructions, and when a part or all of the computer instructions are run, the method according to any one of claims 1 to 7 is performed.

```
                          ┌──────────┐
                          │  Start   │
                          └────┬─────┘
                               │
                    ┌──────────▼──────────┐
                    │ Multiplexed frame   │
                    └──────────┬──────────┘
                               │
                               ▼
                          ╱─────────╲              No     ┌──────────────┐
                         ╱ Is a channel ╲──────────────▶  │ Random time  │
                         ╲   idle?    ╱                    │  backoff     │
                          ╲─────────╱                      └──────────────┘
                               │ Yes
```

Do not use an IEEE
802.11 RTS/CTS
mechanism

Send an RTS frame

Is a CTS frame
received?

No

Use the IEEE 802.11
RTS/CTS mechanism

Yes

Send a data frame

End

**FIG. 1**

Node A

Node B

Node C

**FIG. 2**

PPDU

| Training field | Signal field | Data |
|---|---|---|

(a)

PPDU

| LPCP preamble field | Signal field | Data |
|---|---|---|

(b)

PPDU

| Training field 1 | Signal field | Training field 2 | Data |
|---|---|---|---|

(c)

FIG. 3

Antenna pattern switching point

Antenna pattern

| Omnidirectional antenna pattern | Antenna pattern corresponding to a STA |
|---|---|

AP

CTS

SIFS          SIFS

STA

RTS                    PPDU

FIG. 4

Perform phase shift on received
signals of N small antennas

↓

Perform signal combination

↓

Measure signal strength to
determine an antenna pattern

FIG. 5

FIG. 6

S701: PPDU

S702: Before a first moment, receive the PPDU by using a first antenna pattern

S703: After the first moment, receive the PPDU by using a second antenna pattern

FIG. 7

First moment and second moment

| First antenna pattern | Second antenna pattern |
|---|---|

| Training field 1 | Signal field | X-STF | ... | Data |
|---|---|---|---|---|

Training field 2

FIG. 8

First moment

| | Second antenna pattern |

z

Second moment

x

| L-STF | ... | Signal field | Data |

Training field

## FIG. 9

First moment

| First antenna pattern | Second antenna pattern |

z

Second moment

x

| Training field 1 | Signal field | X-STF | ... | Data |

Training field 2

## FIG. 10

First moment

| | Second antenna pattern |

z

Second moment

x

| L-STF | ... | Signal field | Training field 2 | Data |

Training field 1

## FIG. 11

First moment

| /// First antenna pattern /// | Second antenna pattern |

Second moment

| Training field 1 | Signal field | X-STF | ... | Data |

Training field 2

(a)

$z$

Second moment

$x$

| Training field 1 | Signal field | X-STF | ... | Data |

Training field 2

(b)

FIG. 12

EP 4 693 941 A1

First moment

| First antenna pattern | Second antenna pattern |

t1    t2

n

| Training field 1 | Signal field | X-STF | ... | Data |

Training field 2

FIG. 13

Start

Before a first moment, measure signal quality of a PPDU received by using a first antenna pattern, to obtain first signal quality

Is the first signal quality greater than or equal to a first threshold?

No

Yes

Determine a second antenna pattern based on the first signal quality and a mapping relationship between a signal quality range and an antenna pattern

Switch the antenna pattern from the first antenna pattern to the second antenna pattern

End

FIG. 14

Start

Before a first moment, measure signal quality of a PPDU received by using an omnidirectional antenna pattern, to obtain second signal quality

Is the second signal quality greater than or equal to a second threshold?

No

Yes

Switch an antenna pattern from the omnidirectional antenna pattern to a directional antenna pattern

End

FIG. 15

First moment and second moment

| Omnidirectional antenna pattern | Directional antenna pattern |
|---|---|

| Training field 1 | Signal field | X-STF | ... | Data |
|---|---|---|---|---|

Training field 2

(a)

First moment

| | Directional antenna pattern |
|---|---|

z

Second moment

x

| L-STF | ... | Signal field | Data |
|---|---|---|---|

Training field

(b)

First moment

| Omnidirectional antenna pattern | Directional antenna pattern |
|---|---|

z

Second moment

x

| Training field 1 | Signal field | X-STF | ... | Data |
|---|---|---|---|---|

Training field 2

(c)

First moment

| | Directional antenna pattern |
|---|---|

z

Second moment

x

| L-STF | ... | Signal field | Training field 2 | Data |
|---|---|---|---|---|

Training field 1

(d)

First moment

| Omnidirectional antenna pattern | Directional antenna pattern |
|---|---|

n         t1    t2

| Training field 1 | Signal field | X-STF | ... | Data |
|---|---|---|---|---|

Training field 2

(e)

FIG. 16

Communication apparatus 170

Processing module 1701

Interface module 1702

FIG. 17

Communication apparatus 1800

Processor 1801

Memory 1803

Instructions

Communication interface 1802

FIG. 18

## INTERNATIONAL SEARCH REPORT

| | International application No. |
|---|---|
| | **PCT/CN2024/094299** |

**A.    CLASSIFICATION OF SUBJECT MATTER**

H04B7/06(2006.01)i

According to International Patent Classification (IPC) or to both national classification and IPC

**B.    FIELDS SEARCHED**

Minimum documentation searched (classification system followed by classification symbols)

IPC: H04B H04W H04L

Documentation searched other than minimum documentation to the extent that such documents are included in the fields searched

Electronic data base consulted during the international search (name of data base and, where practicable, search terms used)

CNTXT, ENTXTC, ENTXT, DWPI: 天线, 波束, 方向图, 图样, 切换, 调整, 改变, 变更, 时刻, 时间, 时机, PPDU, STF, antenna, beam, direction, orientation, pattern, switch, change, adjust, time, moment

**C.    DOCUMENTS CONSIDERED TO BE RELEVANT**

| Category* | Citation of document, with indication, where appropriate, of the relevant passages | Relevant to claim No. |
|---|---|---|
| X | US 2018352499 A1 (RUCKUS WIRELESS, INC.) 06 December 2018 (2018-12-06) description, paragraphs [0047]-[0085], and figures 4-6 | 1-17 |
| A | CN 104617391 A (HUAWEI DEVICE CO., LTD.) 13 May 2015 (2015-05-13) entire document | 1-17 |
| A | US 2018279170 A1 (PANASONIC INTELECTUAL PROPERTY MANAGEMENT CO., LTD.) 27 September 2018 (2018-09-27) entire document | 1-17 |
| A | WO 2021190492 A1 (HUAWEI TECHNOLOGIES CO., LTD.) 30 September 2021 (2021-09-30) entire document | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 July 2024** | **19 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/094299**

| Patent document cited in search report | | | Publication date (day/month/year) | Patent family member(s) | | | Publication date (day/month/year) |
|---|---|---|---|---|---|---|---|
| US | 2018352499 | A1 | 06 December 2018 | WO | 2017082941 | A1 | 18 May 2017 |
| | | | | EP | 3375108 | A1 | 19 September 2018 |
| CN | 104617391 | A | 13 May 2015 | | None | | |
| US | 2018279170 | A1 | 27 September 2018 | US | 10645612 | B2 | 05 May 2020 |
| | | | | JPWO | 2017077665 | A1 | 30 August 2018 |
| | | | | WO | 2017077665 | A1 | 11 May 2017 |
| | | | | EP | 3373642 | A1 | 12 September 2018 |
| | | | | CN | 108029041 | A | 11 May 2018 |
| WO | 2021190492 | A1 | 30 September 2021 | CN | 113452416 | A | 28 September 2021 |

Form PCT/ISA/210 (patent family annex) (July 2022)

**EP 4 693 941 A1**

**Patent documents cited in the description**

- CN 202310645081X